# EUROPEAN PATENT APPLICATION

(11) **EP 1 284 402 A2**
(43) Date of publication of application: **19.02.2003**
(21) Application number: 02255605.4
(22) Date of filing: 09.08.2002
(51) Int. Cl.: F25J 3/00

(54) **System and method of cooling**

(30) Priority: 15.08.2001 US 312441 P
(71) Applicant: THE BOC GROUP, INC., Murray Hill, New Providence, New Jersey 07974-2082 (US)
(72) Inventor: Davies, Brian Morice, Summit, NJ 07901 (US); McAllister, Stephen Robert, Monroe Township, NJ 08831 (US); Naumovitz, Joseph Paul, Lebanon, NJ 08833 (US)
(74) Representative: Wickham, Michael

(57) **Abstract**

A hot fluid stream is cooled by air in a first stage or device 110 to a first temperature. The thus cooled fluid stream is further cooled by water to a second temperature in a second stage or device 120 in series with the first stage or device 110. The hot fluid stream flows from equipment, for example, a compression stage in an air separation plant or is itself a heat exchange fluid which has been warmed by indirect heat exchange with hot gas flowing from such a compression stage.

## Description

This invention relates to a system and method of cooling.

Conventional systems for cooling hot fluids in industrial plants or services typically use either air coolers, which do not require the availability of a water resource, or water coolers, which do require a water resource. As an example, a hot fluid may be air-cooled by passing the fluid through an equipment or device, e.g., a heat exchanger, that exchanges heat directly with the surrounding atmosphere. An alternative air cooling configuration may entail passing the hot fluid through an equipment or device that exchanges heat with a colder fluid or a liquid heat exchange medium, e.g., a water/glycol mixture, which in turn passes through another device that exchanges heat with the surrounding atmosphere. In the latter air cooling configuration, the colder fluid is provided as a circulating stream in a closed loop circuit with minimal evaporative loss of the fluid.

There are two principal types of configurations of water based cooling systems, both of which use a circulating flow of cooling water to cool the hot fluid. In one configuration, the cooling water undergoes heat exchange with the hot fluid, and is then cooled in an evaporative cooling tower before re-circulating back to the process or industrial service. This configuration requires additional water to make up for the evaporative loss to the atmosphere. Water make up is also required to compensate for losses resulting from the need (with this type of system) to purge dissolved mineral matter from the circulating cooling water by means of a blowdown stream, which must be disposed of appropriately. In another configuration, heat is rejected from the cooling water directly to a body of water, which is usually a natural water source such as a river, pond or sea. Both types of water based cooling systems impact the water resource - the first type by virtue of the water consumption and blowdown disposal, and the second type by virtue of the rise in temperature of the body of water to which the heat is rejected.

Since an air-cooled system is not as efficient as a water-cooled system in terms of the amount of heat transfer per unit surface area, a conventional system using air cooling generally requires a much larger surface area for heat exchange than a water-cooled system of comparable cooling capacity. Thus, air-cooled systems are often more expensive than water-cooled systems, particularly if they are used for applications that require lower temperature fluids for more efficient operations. Examples of these applications include, but are not limited to, gas compression, processes that utilize refrigerated or cryogenic equipment, and certain absorption and adsorption processes. However, there may be circumstances that require the use of air-cooled systems for these applications, e.g., in situations where the cost of water is high, or where water use is restricted due to limited availability, environmental concerns or other reasons.

Therefore, there is an ongoing need to provide alternative cooling systems or methods for use with industrial plants or processes, particularly air separation plants.

According to the present invention there is provided a cooling system for use in an air separation plant, comprising an air-cooled stage downstream of equipment in said air separation plant, the air-cooled stage for cooling a hot fluid stream associated with said equipment to a first temperature; and a water-cooled stage for cooling said hot fluid stream further to a second temperature downstream of said air-cooled stage.

The invention also provides a method of cooling for use in an air separation plant, comprising:
a) cooling a hot fluid stream associated with equipment in said air separation plant to a first temperature using an air-cooled stage; and
b) cooling said hot fluid stream further to a second temperature in a water-cooled stage downstream from said air-cooled stage.

The method according to the invention is particularly suitable for use in cooling a feed air stream to the air separation plant downstream of a first compression stage but typically upstream of a second compression stage. The compression stages may form part of the same compressor or part of a compression-expansion system. Indeed, we believe that the method according to the invention is suitable for use in cooling a hot gas stream produced in a compression stage irrespective of the nature of the industrial plant of which the compression stage forms a part.

According to another aspect of the invention there is thus provided a method of cooling for use in an industrial plant comprising:
a) cooling to a first temperature using an air cooled stage a hot fluid stream originating from equipment in said industrial plant, the equipment being a compressor or a compressor-expander system;
b) cooling the hot fluid stream from the first temperature to a second temperature using a water cooled stage.

As used herein, an "air cooler" or "air-cooled device" refers generally to any heat exchanger whose primary mode of heat rejection to the atmosphere or surroundings is achieved by non-evaporative heat transfer to the atmosphere. It is preferable that there is no evaporative heat transfer in the first cooling stage, i.e., air-cooled stage, although a limited amount of evaporation can be tolerated. Such an air cooler may encompass many different designs, including, for example, some designs in which a limited amount of water may be used to enhance the performance of the air cooler. Thus, a cooling stage incorporating an air cooler that rejects heat to the surrounding atmosphere primarily through a non-evaporative heat transfer process will be referred to as an air-cooled stage. Accordingly, an air-cooled stage may encompass a configuration that includes a closed loop liquid coolant system for transferring heat from the hot process fluid to the air cooler, which then rejects heat to the surrounding atmosphere. Heat exchangers that are part of a system that rejects heat (entirely or primarily) by use of a water resource, either by evaporative cooling, or to a body of water such as a river, lake or sea, will be referred to as "water coolers" or "water-cooled".

The hybrid cooling system and method of the present invention are particularly well-suited for applications or locations where water supply is expensive, where water use is restricted by virtue of limited resource or availability, or where water discharge from cooling towers, or heat release into a body of water, may present environmental issues.

In operation of the first stage of the system according to the invention, the temperature of the hot fluid is relatively high, and the air-cooled stage can be operated at a correspondingly higher approach temperature (i.e., temperature difference between the outgoing cooled fluid and the incoming ambient air coolant). This allows the bulk of the heat to be removed without the use of a larger air-cooled system, which would otherwise be required for operations at lower approach temperatures. Although the hot fluid stream may be a process fluid originating directly from a heat source such as certain services or equipment in an industrial plant, particularly a compressed air stream from a compressor of an air separation plant, it may alternatively be a process fluid originating indirectly from such a source, i.e. the hot fluid stream may be a suitable heat transfer medium used for heat exchange with the process fluid (with no direct contact between the two fluids), or for cooling the equipment in the industrial plant.

Since the heat transfer coefficient for water cooling is larger than for air cooling, smaller and less costly water-cooled devices can be used in the second stage to achieve smaller approach temperatures. The two cooling stages in the present invention are accomplished in separate cooling systems or devices, as opposed to being integrated within a single cooling system such as a hybrid cooling tower disclosed in US-A-6,233,941, or a combined wet-dry heat transfer system disclosed in US-A-4,003,970. The two serially connected cooling stages are used in the present invention for cooling a hot fluid stream via heat transfer with air (directly or indirectly) and then with water in order to achieve a lower final temperature.

The systems and methods according to the present invention will now be described by way of example with reference to the accompanying drawings, in which
Figure 1 is a schematic illustration of one embodiment of the present invention having an air-cooled device and a water-cooled device coupled to an evaporative tower;
Figure 2 is a schematic illustration of another embodiment of the present invention having an air-cooled device incorporated within a closed loop cooling circuit and a water-cooled device coupled to an evaporative tower;
Figure 3 is a schematic illustration of another embodiment of a circulating cooling system having an air-cooled device in series with an evaporative cooling tower;
Figure 4 is a schematic illustration of another embodiment of the present invention, with water cooling provided in a "once-through" configuration; and
Figure 5 is a schematic illustration of cooling compressed air streams using cooling configurations according to the present invention.

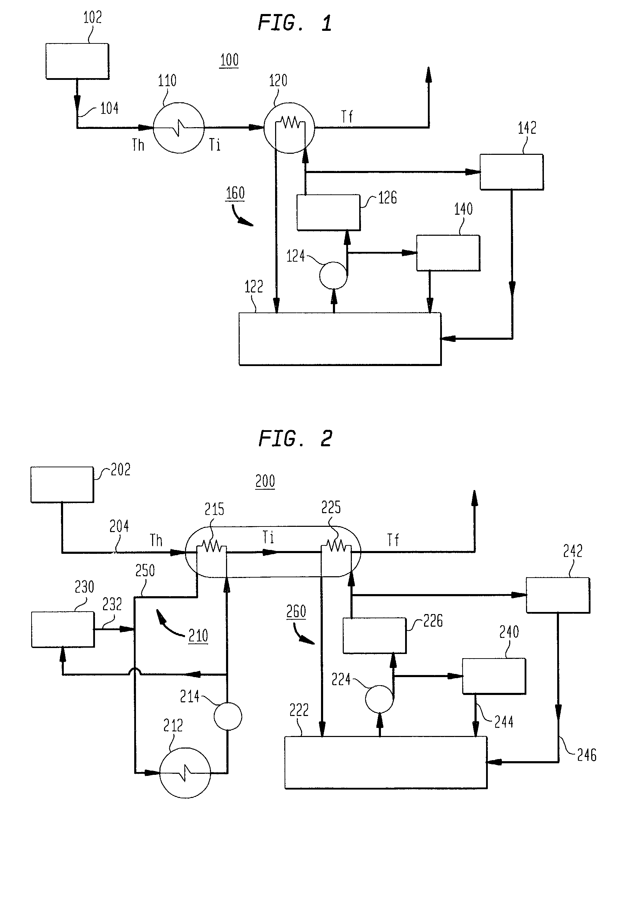

Figure 1 is a schematic illustration of a cooling system 100 according to one embodiment of the present invention typically forming part of an air separation plant. The cooling system 100 comprises an air-cooled stage or device 110 in series with a water-cooled stage or device 120. As shown in Figure 1, a hot fluid stream 104 from a heat source 102 is first subjected to cooling in the air-cooled device 110 to an approach temperature given by the difference between Tᵢ (temperature of the hot fluid stream leaving the air cooler) and Taᵢₙ (incoming air temperature). The hot fluid is then further cooled by the water-cooled device 120 to another temperature T_{f}.

As shown in Figure 1, a circulation pump 124 provides water circulation between the water-cooled device 120 and an evaporative tower circuit 122. The pump 124, water-cooled device 120 and the tower circuit 122 may be considered as forming a water cooling circuit or system 160. The evaporative tower circuit 122 is a conventional circuit that comprises generally various components (not shown) that may include an evaporative tower, a fan to facilitate evaporative cooling, as well as associated components, such as pump, filter and water treatment equipment, intake and discharge structures, among others. An optional chiller 126 may be used to further cool the water being circulated to the water-cooled device 120.

In this embodiment, one or more heat sources 102 are provided with their own air-cooled devices 110 to satisfy the respective cooling needs, while individual components within the water cooling system 160 such as pump 124 or chiller 126 may be shared with one or more services or equipment requiring cooling. Thus, portions of the cooling water stream may be distributed to equipment 140, 142 requiring cooling, and hot water from such equipment or services will subsequently enter the evaporative tower circuit 122. In general, water supplied to these other services or equipment 140 and 142 may be further cooled by one or more chiller systems, as needed, and may also be cooled in one or more air coolers (not shown) prior to being returned to the water cooling circuit 160.

As an example, the heat source 102 may be one stage of a compressor in an air separation plant. A hot gas stream 104, after compression by the compressor stage, may have an initial temperature (Tₕ) of about 80°C. The ambient air temperature (Taᵢₙ) might be about 30°C. The air-cooled device 110 may be a fin fan cooler, which is used to cool the hot gas to an intermediate temperature (Tᵢ) of, for example, about 50°C. The hot gas is subsequently cooled by the water-cooled device 120 to a temperature (T_{f}) of about 35°C, before passing to another compressor stage or to other equipment in the air separation plant. The water streams entering and exiting the tower circuit 122 typically has temperatures of about 40°C and about 30°C, respectively.

The operating temperatures cited in this example are illustrative, and other compressor applications may involve different operating temperature ranges. In general, the hybrid cooling system is applicable to many other processes or wide ranging operating temperature conditions.

One parameter for characterizing the performance of an air-cooled device is the logarithmic mean temperature difference (LMTD), which is defined as (ΔT₁ - ΔT₂)/In (ΔT₁/ΔT₂), where ΔT₁ is given by: the temperature difference between the incoming hot fluid and the outgoing air stream (after heat exchange), and ΔT₂ is the temperature difference between the outgoing hot fluid (after being air-cooled) and the incoming air stream (before heat exchange). In general, the smaller the LMTD value, the larger is the size requirement of the air-cooled equipment. To achieve a given desired final temperature (T_{f}) of the hot fluid, the hybrid cooling system allows the air-cooled device to be operated at a higher LMTD than a cooling system using air cooling alone, thus allowing the use of a smaller air cooler than otherwise possible.

The hybrid cooling approach offers a further advantage, especially in areas with a hot and dry climate. Due to the relatively large evaporative cooling potential (resulting from a large difference between the wet bulb and dry bulb temperatures), the combined air cooling and water cooling approach allows the hot fluid to be cooled to a lower final temperature than is possible if air cooling is used alone.

Figure 2 is a schematic illustration of an alternative cooling system 200 according to another embodiment of the present invention typically forming part of an air separation plant. A hot fluid stream 204 generated from a heat source 202 is first subjected to cooling in a first heat exchange section 215. Cooling in this first stage is achieved by a closed loop cooling circuit 210 that incorporates an air cooler 212 for heat rejection. In the closed loop cooling circuit 210, a coolant stream 250 containing a suitable heat transfer fluid is circulated by a circulating pump 214. In general, different heat transfer fluids may be used, e.g., water, or optionally, a water and glycol mixture, among others. The hot fluid stream 204 is cooled from a temperature Tₕ to Tᵢ by heat exchange with the coolant stream 250 in the heat exchange section 215. The warm coolant stream 250 is then cooled by the air cooler 212, which may be a fin fan cooler or other suitable designs. The cooled coolant stream 250 exiting the air cooler 212 is circulated back to the heat exchange section 215. The use of the closed loop cooling circuit 210 in this embodiment is meant to be illustrative. In general, the first cooling stage in this embodiment may be accomplished by other configurations in which a coolant stream is provided to transfer heat from the hot fluid stream 204 to the air cooler 212, which then rejects heat to the surrounding atmosphere.

After the hot fluid stream 204 from heat source 202 is cooled from its initial high temperature Tₕ to an intermediate temperature Tᵢ, it is subjected to further cooling to a final temperature T_{f} in a second heat exchange section 225, which is a water-cooled device. The water-cooled device 225 is coupled to a cooling tower circuit 222 similar to that shown in Figure. 1. A circulation pump 224 circulates water between the tower circuit 222 and the water-cooled device 225, thus forming a water cooling circuit or system 260. An optional chiller 226 may also be provided for further cooling of the water in the water cooling system 260.

In this embodiment, air coolers used for removing heat from different heat sources may be centralized at one or more locations (as opposed to being individually located proximate to each heat source). In addition, aside from serving the cooling requirement for heat source 202, the closed loop circulating circuit 210 with the air cooler 212 may provide cooling to one or more heat sources such as 230. Thus, a coolant stream 232 associated with heat source 230 may be cooled by the air cooler 212, and part of the coolant stream downstream of the pump 214 may be circulated back to this service or equipment 230.

Furthermore, components in the water cooling circuit 260, e.g., tower circuit 222, pump 224 or chiller 226, may be shared with other services or equipment 240 and 242 requiring cooling. Thus, part of the cooled water stream exiting the tower circuit 222 may be circulated to equipment 240 and 242, and hot water streams 244 and 246 from equipment 240 and 242 may return to the tower circuit 222 for cooling.

As an example in the context of an air separation plant, the heat source 202 may be a compressor producing a hot compressed gas stream 204 having a temperature Tₕ of about 80°C, and the first and second heat exchange sections 215 and 225 may correspond to two different sections within a shell and tube heat exchanger for cooling the compressed air stream. Alternatively, the first and second heat exchange sections 215 and 225 may also be separate heat exchangers. The ambient air temperature, e.g., around the air cooler 212, may be about 30°C. The coolant stream in the closed loop cooling circuit 210 may be supplied to the heat exchange section 215 at a temperature of about 45°C, and has a temperature between about 55-60°C after heat exchange with the compressed gas stream 204, which may be cooled to a temperature Tᵢ of about 50°C. In the second cooling stage, temperature of the cooling water entering the water-cooled device 225 is typically about 30°C and may increase to about 40°C after heat exchange with the compressed gas stream 204, which is cooled to a final temperature T_{f} of about 35°C. After cooling, the compressed gas stream 204 is directed to other service or equipment of the air separation plant.

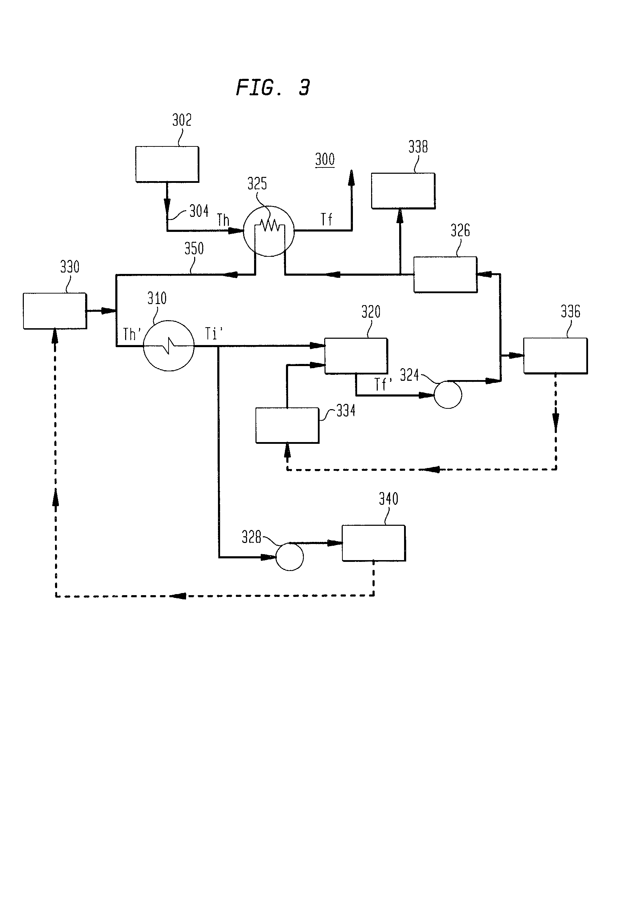

Figure 3 is a schematic illustration of another alternative hybrid cooling system 300 according to the present invention typically forming part of an air separation plant. A hot fluid stream 304 from a heat source 302 is cooled from an initial temperature Tₕ to a temperature T_{f} by heat exchange with a cooling water stream 350 in a heat exchange section 325. The hybrid cooling system 300 comprises an air-cooled device 310 and a water-cooled device 320 connected in series, along with a circulating pump 324 to circulate water between the two cooling devices. In this example, the water-cooled device 320 is an evaporative water tower. Unlike certain prior art teaching, e.g., hybrid cooling tower of US 6,233,941, the air-cooled device 310 and the water tower 320 used in the present invention are distinct cooling devices, as opposed to being incorporated within a single structure. Thus, these devices may be located in disparate locations of a facility which has advantages in overall plant layout.

In this embodiment, a single circulating water system is used. The water stream 350 containing the amount of heat absorbed from the hot fluid stream 304 is first cooled by the air-cooled device 310 from a temperature Tₕ' to a temperature Tᵢ'. The air-cooled device 310 may, for example, be a fan-assisted fin cooler, or cooler of other suitable designs. The water stream is then subjected to a second cooling stage provided by the evaporative cooling tower 320. The cooled water stream having a temperature of T_{f}' is circulated back to the heat exchange section 325 by the pump 324. An optional chiller 326 may also be used for further cooling of the circulating water.

As an illustrative example, using the hybrid cooling system 300 at an ambient temperature of 30°C, the hot fluid stream 304 having an initial temperature Tₕ of about 80°C can readily be cooled to a temperature T_{f} of about 35°C. In this embodiment, the air-cooled device 310 provides the first stage of cooling for the cooling water stream 350, resulting in a reduction of temperature from about 60°C to about 45°C for the cooling water stream 350. The cooling tower 320 removes additional heat from the water stream 350, resulting in a coolant stream temperature T_{f}' of about 30°C. This embodiment accommodates a much higher water temperature rise more economically than an individual air-cooled or water-cooled system because the hybrid equipment size requires less surface for a given approach to ambient temperature, thus resulting in lower capital. This embodiment also accommodates a much higher water temperature rise more economically than an individual water-cooled system because the hybrid system requires less makeup water and blowdown which would lead to savings in operating cost.

Similar to embodiments illustrated in Figure 1 and Figure 2, this hybrid cooling system 300 may also be coupled to other services or equipment 336, 338 and 340 requiring cooling. For example, cooled water streams may be distributed to equipment 336 or 338 as appropriate. Optionally, a circulating pump 328 may be used, as required, to provide a cooling water stream to another service or equipment 340 that may be able to utilize a warmer coolant stream at temperature Tᵢ'. Hot water streams from equipment 336, 338 or 340 may be returned to the cooling system 300 at different connection points upstream or downstream the air cooler 310, e.g., at connection points 330 or 334. Some of these optional return paths are shown as dotted lines in Figure 3. In general, these other services or equipment may utilize cooling provided by one or more of the following: individual air coolers, coolant from the evaporative tower circuit with or without supplemental chilling, or any combinations thereof. Again, it is understood that temperature ranges used in the above examples are meant for illustrative purposes only, and the hybrid cooling system is applicable to high temperature sources as well.

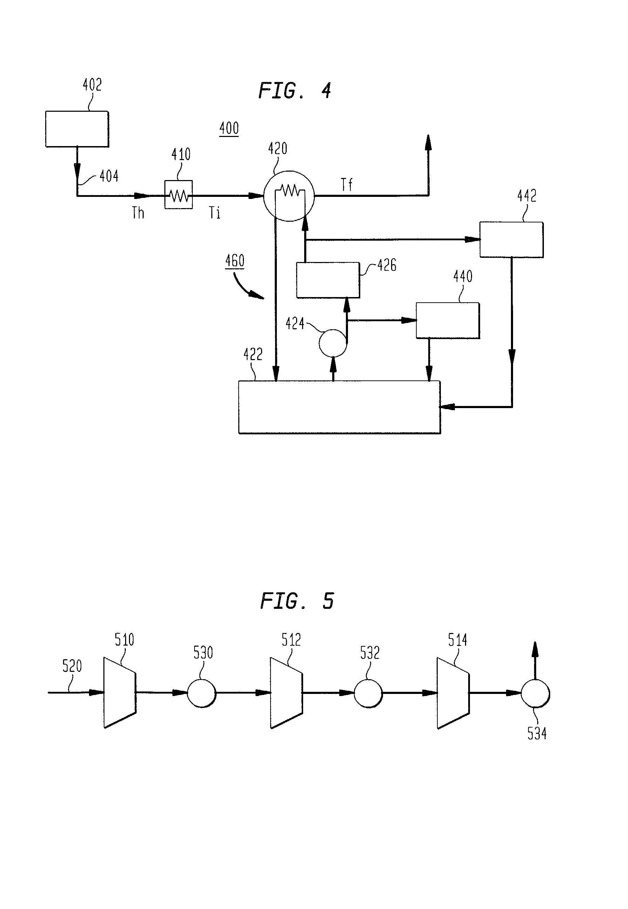

Figure 4 illustrates another embodiment of a cooling system 400 comprising an air-cooled system 410 and a water-cooled system 460. The air-cooled system 410 may correspond to an air-cooled device similar to that described in Figure 1 and typically forms part of an air separation plant. Alternatively, the air-cooled system 410 may be similar to the closed loop cooling circuit 210 illustrated in Figure 2, where cooling of a hot fluid stream 404 from a heat source 402 is achieved by heat exchange with a circulating liquid coolant, which in turn is cooled by an air-cooled device. After being cooled from an initial temperature Tₕ to a temperature Tᵢ, the hot fluid stream 404 is further cooled to a final temperature T_{f} by the water-cooled system 460.

In this embodiment, the water-cooled system 460 comprises a water-cooled device 420 coupled to a water source 422, which is a body of water such as a river, lake or sea. Water from this water source 422 is provided to the water-cooled device 420 by a water pump 424. After heat exchange with the hot fluid 404 in the water-cooled device 420, the cooling water is discharged into the water source 422. This configuration is sometimes referred to as a "once-through" cooling system. Optionally, a chiller 426 may be used to provide additional chilling of the cooling water prior to entering the water-cooled device 420. Again, cooling water from the water source 422 may be used to provide cooling to other services or equipment 440, 442, as desired. It is understood that this once-through water cooling system may be used as part of the hybrid cooling systems previously illustrated in Figures 1-3. That is, the evaporative tower circuits previously shown in Figures 1-3 may well be replaced by or incorporate a water source that is open to the atmosphere, such as a river, lake, sea and so on.

As shown in the above examples, the water-cooled stage comprises an evaporative water tower or an open body of water for heat rejection. Depending on the applications, however, a closed-loop coolant circuit may also be provided in the water-cooled stage. For example, the hot fluid stream may undergo heat exchange with a coolant in the closed-loop circuit, which then exchanges heat with an evaporative water tower or an open body of water for final heat rejection.

It is also possible, in other embodiments, to arrange the two cooling stages such that both evaporative and non-evaporative heat transfer processes are used within each cooling stage. In these cases, the proportion of evaporative to non-evaporative cooling used in the second cooling stage should be greater than that used in the first stage.

Embodiments of the present invention are generally applicable to provide cooling for major equipment or machinery in an industrial plant. A hybrid cooling system can be used, for example, as a compressor intercooler between different compressor stages in an industrial plant, or for cooling compressor/expander systems. Under certain circumstances, the hybrid cooling system can also be applied to refrigeration unit condensers. Figure 5 illustrates schematically several compressor stages 510, 512 and 514 arranged in series to provide sequential compression of a gas stream 520 to increasingly higher pressures. The compression stages may form part of an air separation plant. Cooling of the compressed gas streams exiting compressor stages 510 and 512 are achieved by respective intercoolers 530 and 532 having the hybrid cooling designs of the present invention. By cooling the compressed gas streams after each stage of compression, efficient gas compression can be achieved at reduced cost. If desired, the hybrid cooling system may also be used as an aftercooler. Although there will not be a power saving for the compressor itself, capital costs of downstream equipment, e.g., sieve costs for pre-purification units, can be reduced.

As an example, the air stream 520 may enter compressor stage 510 at a first pressure P₁ of about 1 atma and a temperature T₁ of about 21°C. After compression, the gas stream may have a pressure P₂ of about 2 atma and a temperature T₂ of about 100°C. The intercooler 530 having one of the hybrid cooling designs of the present invention is used to cool the compressed gas stream to a lower temperature, e.g., about 26°C. The cooled gas stream is then subjected to further compression in compressor stage 512 to about 4 atma and a temperature of about 105°C. This further compressed air stream can be cooled back to about 26°C by another intercooler 532 prior to entering the next compressor stage 514, after which, an aftercooler 534 may be used to cool the compressed gas stream to a desired temperature.

It is understood that the pressure and temperature conditions cited in the above examples are meant for illustrative purpose only. Depending on the compressor designs or specific applications, other pressure and temperature ranges may be obtained for the various gas streams. Furthermore, the hybrid cooling system is generally applicable to a wide range of operating pressure or temperature conditions, and are well-suited for cooling needs associated with machinery or equipment in industrial plants or for cooling process fluids from an air separation plant.

The hybrid cooling systems provide several advantages over conventional cooling systems. For example, by operating an air-cooled device at a large approach temperature in the first cooling stage, the surface area and the fan power requirements for the air-cooled device may be reduced. This results in a lower cost per unit heat rejection compared to an air-cooled system that is designed for operation at lower approach temperatures. With the water-cooled part of the hybrid system, operation at tight approaches is achievable, which in turn, allows compressor operation to be performed at higher efficiency. Furthermore, lower final temperatures can be achieved (compared to air cooling alone) as a result of evaporative cooling effect associated with the water cooling stage. Systems with air coolers alone normally run with higher approaches, resulting in higher compression costs.

For cooling systems having evaporative cooling towers, the use of hybrid cooling as described herein allows a considerable reduction in the water make up and blowdown requirements compared to conventional systems using evaporative cooling alone, since a portion of the heat is removed by air cooling. Alternatively, for systems using the once-through water cooling configuration, the hybrid cooling approach allows a reduction in the amount of heat disposed to the body of water. The overall effect is that the hybrid cooling system will have a lower capital and operating cost than air-cooled systems designed in accordance with normal guidelines, but would achieve performance levels close to conventional evaporative systems at reduced makeup requirements and/or environmental impact on the water resource.

## Claims

1. A cooling system for use in an air separation plant, comprising:
an air-cooled stage downstream of equipment in said air separation plant, the air-cooled stage for cooling a hot fluid stream associated with said equipment to a first temperature; and
a water-cooled stage for cooling said hot fluid stream further to a second temperature downstream of said air-cooled stage.

2. A cooling system according to claim 1, wherein said water-cooled stage comprises a water-cooled device, a water source, and a pump for delivering a water coolant stream from said water source to said water-cooled device.

3. A cooling system according to claim 1 or claim 2, wherein said air-cooled stage comprises a heat exchange section, an air cooler, and a pump for circulating a coolant stream between said heat exchange section and said air cooler; said heat exchange section being configured for heat exchange between said hot fluid stream and said coolant stream.

4. A cooling system according to claim 1 or claim 2, wherein said air-cooled stage and said water-cooled stage are coupled in series to a heat exchange section and a circulating pump, said air-cooled stage being downstream from said heat exchange section to provide air cooling of said hot fluid stream to said first temperature.

5. A cooling system according to claim 4, wherein said air-cooled stage is a non-evaporative air cooler and said water-cooled stage is an evaporative water tower

6. A cooling system according to any one of the preceding claims, wherein said equipment is a compression stage or a series of compression stages.

7. A method of cooling for use in an air separation plant, comprising:
a) cooling a hot fluid stream associated with equipment in said air separation plant to a first temperature using an air-cooled stage; and
b) cooling said hot fluid stream further to a second temperature in a water-cooled stage downstream from said air-cooled stage.

8. A method according to claim 7, wherein said water-cooled stage comprises a water-cooled device, a water source, and a pump for delivering a water coolant stream from said water source to said water-cooled device for cooling said hot fluid stream to said second temperature.

9. A method according to claim 7, wherein said air-cooled stage is selected from the group consisting of a fin fan air cooler and a liquid circulating circuit; said liquid circulating circuit comprising a heat exchange section, an air-cooled device and a pump for circulating a liquid coolant between said heat exchange section and said air-cooled device.

10. A method according to any one of claims 7 to 9, wherein said hot fluid stream is a process stream exiting from said equipment or a coolant stream heated by heat exchange with said process stream.

11. A method of cooling according to any one of claims 7 to 10, wherein the equipment is a compression stage or a plurality of compression stages.

12. A method of cooling for use in an industrial plant comprising:
a) cooling to a first temperature using an air cooled stage a hot fluid stream originating from equipment in said industrial plant, the equipment being a compressor or a compressor-expander system;
b) cooling the hot fluid stream from the first temperature to a second temperature using a water cooled stage.

13. A method according to claim 12, wherein said hot fluid stream is a compressed air stream from a first compressor, and said method further comprises introducing said compressed air stream at said second temperature into a second compressor.
